(19) Europäisches Patentamt
European Patent Office
Office européen des brevets

(11) **EP 2 202 900 A1**

(12) **EUROPEAN PATENT APPLICATION**

(43) Date of publication:
**30.06.2010 Bulletin 2010/26**

(51) Int Cl.:
***H04J 3/06*** *(2006.01)* *H04L 27/26* *(2006.01)*

(21) Application number: **08306022.8**

(22) Date of filing: **24.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing
92443 Issy-les-Moulineaux Cedex (FR)**

(72) Inventors:
• **Du, Yongjiu
100085 Beijing (CN)**

• **Liu, Peng
100085 Beijing (CN)**
• **Zou, Li
100088 Beijing (CN)**

(74) Representative: **Ruellan-Lemonnier, Brigitte
Thomson
1, rue Jeanne d'Arc
92443 Issy-les-Moulineaux Cedex (FR)**

(54) **Timing error detection**

(57)     A method for detection of frame timing error in a system in which a pseudorandom number sequence has been added to a transmitted signal is set out. It is applicable to Orthogonal Frequency Division Multiplexing systems.

Figure 9 : Integral and fractional timing error demonstration

EP 2 202 900 A1

## Description

FIELD OF THE INVENTION

This invention concerns timing error detection and recovery in an Orthogonal Frequency Division Multiplexing (OFDM) system which is based on a PN (pseudorandom) sequence used for time domain synchronization. This invention could also be used in a frequency domain synchronization system.

BACKGROUND OF THE INVENTION

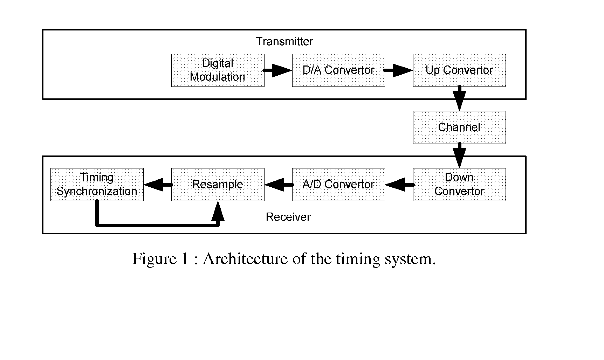

A common architecture related to timing synchronization in a digital communication system is as shown in Figure 1.

In a typical digital communication system, there is a Digital-Analog-Digital process for the transmission signals. In the transmitter end, we use a D/A converter. In the receiver end, we have an A/D converter. Due to the frequency and phase difference between the transmitter clock and the receiver clock, a timing error will be introduced.

The timing error will cause interference, noise and other undesirable effects which may cause the receiver to fail. In order to get better performance, it is desirable to eliminate the timing error.

In a time domain synchronization system, just as in a PN sequence based synchronization system, we can use a correlation process to get the exact boundary of the frame, which is indicated by the channel impulse response.

In a frequency domain synchronization system, just as in CP (cyclic-prefix) and pilot based synchronization systems, we can apply an IFFT (inverse fast Fourier transform) to the pilot to get the channel impulse response, which can be used for fine timing error detection.

Generally, in digital communication systems, the timing error detector is based on a sample counter. The sample count error in one frame or several frames will be transformed to an equal timing error value and fed back to the resample module.

The sample counter method presents inaccurate results and it will take a long time to get a better estimate. It also cannot detect the sample phase offset.

This invention focuses on the timing error detection and recovery technology which has fast recovery and tracking compared to the traditional method. It could also present a sampling phase error estimation, which is useful for sampling phase sensitive systems.

SUMMARY OF THE INVENTION

In this invention, a timing error detection and recovery method is proposed. A sample counter operating at two times the sample rate is used and the peak position after correlation is used for integral timing error determination. A peak phase detector is used to estimate the fractional timing error by taking the peak sample and using the two adjacent samples for fractional timing error calculation. If there is a timing error, the adjacent samples to the left and right will not be equal. The greater the difference in their amplitudes, the more phase error exists. Subsequently, the integral and fractional timing errors are combined to form the estimated total timing error, which is fed back to the re-sampling module for timing error recovery.

This method of timing error detection and recovery is more accurate and it has faster tracking than other methods of timing synchronization. It can be used for synchronization in most kinds of digital communication systems, such as PN or pilot synchronization systems. This method is capable of faster timing error estimation and recovery compared to other solutions.

BRIEF DESCRIPTION OF THE DRAWINGS

The present invention may be better understood in accordance with the following exemplary figures, in which:

Figure 1 shows the architecture of the timing system;
Figure 2 shows a time-domain PN sequence-based synchronization format;

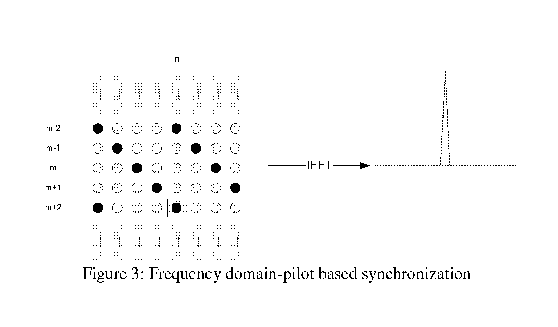

Figure 3 shows a frequency domain pilot-based synchronization format;

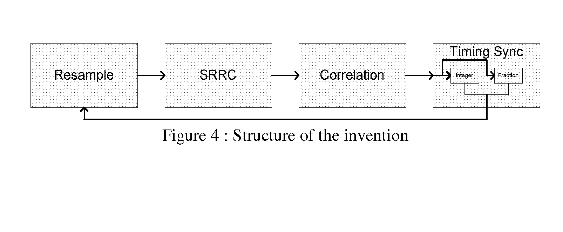

Figure 4 shows the structure of the present invention;
Figure 5 shows a flowchart for timing error detection and recovery;
Figure 6 shows a correlation peak with no timing error;
Figure 7 shows a correlation peak with bad timing;
Figure 8 shows the timing error estimated in a AWGN channel; and

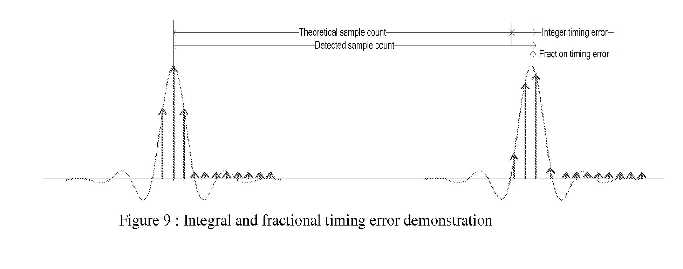

Figure 9 shows the integral and fractional timing error demonstration.

DETAILED DESCRIPTION OF THE INVENTION

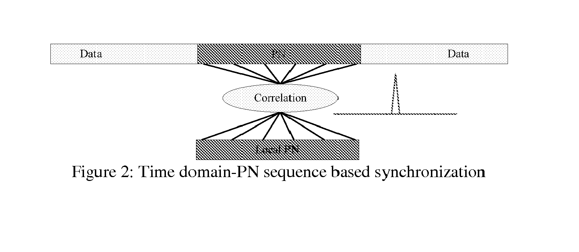

For a PN-based OFDM system, with the frame structure shown in Figure 2, a PN sequence is added in the time domain for synchronization and channel estimation. Correlation is used to find the channel impulse response, which will be a peak in an Additive White Gaussian Noise (AWGN) channel or will be a group of peaks in fading channels. By counting the clock cycles between the corresponding peaks in two adjacent frames, the integral timing error is found. Through detection of the sample phase of the peak, one can calculate the fractional timing error. The combination of the integral and the fractional timing error will be the overall timing error. Then the overall timing error will be fed back to the resample module to recover it.

The data input to the resample module is clocked at greater than two times the sample rate. In order to get two times the sample rate, a re-sampling module is used. After re-sampling, a SRRC (Square Root Raised Cosine) Filter suppresses off-band noise. A correlator following the SRRC filter generates the channel impulse response. Next, the channel impulse response can be used to calculate both the integral and fractional timing offsets. Finally, the combined timing offset is fed back to the re-sampling module for proper timing synchronization.

The present description illustrates the principles of the invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means that can provide those functionalities as equivalent to those shown herein.

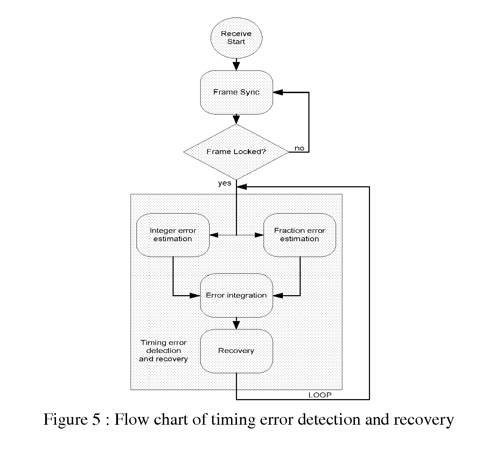

The invention includes an integral and fractional timing error estimation. See Figure 5 for the flow chart of the process, which is as follows:

    a. Peak detection. Both integral and fractional timing error estimation are based on the correlation peak. A peak's absolute value must be larger than both the previous one and the following one. And it must be larger than a threshold, which will be set according to the signal power.

    b. Integral timing error estimation. We define the counted clock cycles between the corresponding peaks in two adjacent frames as the detected frame period. The error between the detected frame period and the theoretical frame period is the integral timing error.

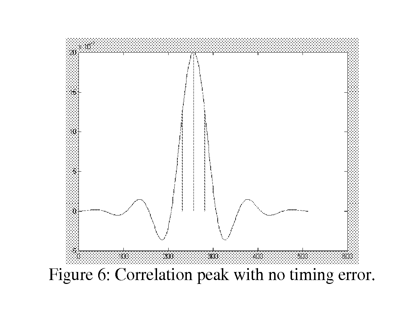

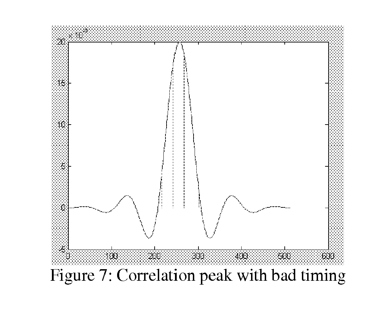

    c. Fractional timing error estimation. When we locate the peak position, we can then calculate the fractional timing error. Here we can first define the sample phase error. For ideal sampling, the correlation peak will look as it does in Figure 6. If phase error exists, the correlation peak will then be as in Figure 7. The phase offset is approximately proportional to X. Here

$$X = \frac{S(peak-1) - S(peak+1)}{S(peak)}$$

*S(peak)* is the absolute value of the peak sample and *S(peak-1)* is the absolute value of the previous peak, *S(peak+1)* is the absolute value of the following peak.

The fractional timing error is the difference of the peak phase offsets in two adjacent frames.

    d. We then combine the integral and the fractional timing errors to get the final estimated timing error.

    e. This timing error will be fed back to the re-sampling module for timing error recovery and proper timing synchronization.

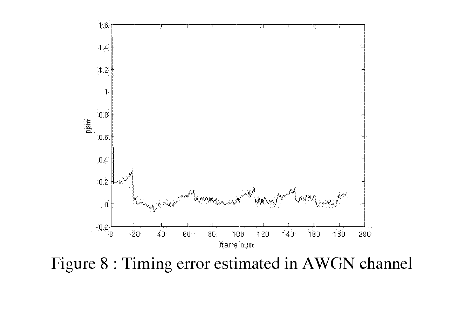

Figure 8 is the simulation result in an AWGN channel. The timing offset could converge to less than

**EP 2 202 900 A1**

0.1 ppm within 16 frames.

**Claims**

1. A method for timing error detection in a system using a pseudorandom sequence for synchronization, the method comprising:

   receiving a signal comprising a pseudorandom sequence ;
   generating a correlation output for said received signal;
   detecting the peak of said correlation output for two adjacent frames;
   calculating a first timing error estimate by finding the difference between the number of clock cycles in a theoretical frame period and the number of clock cycles found between the two said peaks in said correlation output;
   calculating a second timing error estimate by measuring the difference over two adjacent frames of the difference between the absolute values of the samples on either side of said peak of the correlation output divided by the absolute value of the peak amplitude
   combining said first timing error estimate and said second timing error estimate to produce an overall timing error.

2. The method of Claim 1 used in an Orthogonal Frequency Division Multiplexing system.

3. The method of Claim 1, additionally comprising using said overall timing error output to adjust the sampling timing of a receiver system.

4. The method of Claim 1 where said method is used in a pilot based synchronization system.

Figure 1 : Architecture of the timing system.

Figure 2: Time domain-PN sequence based synchronization

Figure 3: Frequency domain-pilot based synchronization

Resample → SRRC → Correlation → Timing Sync [ Integer → Fraction ]

Figure 4 : Structure of the invention

Figure 5 : Flow chart of timing error detection and recovery

Figure 6: Correlation peak with no timing error.

Figure 7: Correlation peak with bad timing

Figure 8 : Timing error estimated in AWGN channel

Figure 9 : Integral and fractional timing error demonstration

Europäisches
Patentamt
European
Patent Office
Office européen
des brevets

# EUROPEAN SEARCH REPORT

**Application Number**

EP 08 30 6022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 295 601 B1 (SINHA) 13 November 2007 (2007-11-13) * figures 2,6 * * column 3, line 40 - line 50 * * column 4, line 17 - line 19 * * column 4, line 37 - line 40 * ----- | 1-4 | INV. H04J3/06 ADD. H04L27/26 |
| X | WO 2007/086654 A (LG ELECTRONICS) 2 August 2007 (2007-08-02) * figures 7-9 * * paragraph [0070] * ----- | 1-4 | |
| A | US 5 761 211 A (YAMAGUCHI) 2 June 1998 (1998-06-02) * column 1, line 20 - line 21 * * column 1, line 45 - line 51 * * column 2, line 21 - line 27 * * figures 5-10 * ----- | 1-4 | |
| A | CANET ET AL.: "Time Synchronization for the IEEE 802.11a/g WLAN Standard" IEEE INTERNATIONAL SYMPOSIUM ON PERSONAL, INDOOR AND MOBILE RADIO COMMUNICATIONS, September 2007 (2007-09), pages 1-5, XP031168144 Piscataway, US * section III A 1 * ----- | 1-4 | **TECHNICAL FIELDS SEARCHED (IPC)** H04L H04J |
| A | LOPEZ-MARTINEZ ET AL.: "Hardware Implementation of a Correlation-based Synchronization Algorithm for Wireless OFDM" IEEE INTERNATIONAL SYMPOSIUM ON PERSONAL, INDOOR AND MOBILE RADIO COMMUNICATIONS, September 2007 (2007-09), pages 1-5, XP031168740 * page 3, left-hand column, paragraph 3 * ----- | 1-4 | |

The present search report has been drawn up for all claims

| Place of search | Date of completion of the search | Examiner |
|---|---|---|
| The Hague | 13 July 2009 | Scriven, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 30 6022

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2009

| Patent document cited in search report | | Publication date | Patent family member(s) | | Publication date |
|---|---|---|---|---|---|
| US 7295601 | B1 | 13-11-2007 | NONE | | |
| WO 2007086654 | A | 02-08-2007 | US | 2007217551 A1 | 20-09-2007 |
| US 5761211 | A | 02-06-1998 | JP | 3414558 B2 | 09-06-2003 |
| | | | JP | 9064857 A | 07-03-1997 |

EPO FORM P0459

For more details about this annex : see Official Journal of the European Patent Office, No. 12/82